# NOUVEAU FASCICULE DE BREVET EUROPEEN

(11) **EP 2 155 813 B2**
(45) Date de publication et mention de la décision concernant l'opposition: **20.11.2019**
(45) Mention de la délivrance du brevet: 17.02.2016
(21) Numéro de dépôt: 08802913.7
(22) Date de dépôt: 17.06.2008
(51) Int. Cl.: C08K 5/00, C08K 5/5313

(54) **COMPOSITIONS THERMOPLASTIQUES IGNIFUGEES**
FLAMMFESTE THERMOPLASTISCHE ZUSAMMENSETZUNGEN
FLAME-PROOFED THERMOPLASTIC COMPOSITIONS

(30) Priorité: 20.06.2007 FR 0704389
(43) Date de publication de la demande: 24.02.2010
(73) Titulaire: Rhodia Opérations, 93306 Aubervilliers (FR)
(72) Inventeur: ANGELI, Silvia, I-21047 Saronno VA (IT); COUILLENS, Xavier, 69003 Lyon (FR); AMORESE, Michelangelo, I-20155 Milano (IT)
(74) Mandataire: Schuck, Alexander
(86) Numéro de dépôt international: PCT/EP2008/057588
(87) Numéro de publication internationale: WO 2008/155319

(56) Documents cités:
- WO-A-2005/033193
- WO-A1-2009/109318
- DE-A1- 10 137 930
- DE-T5- 10 296 914
- FR-A- 2 843 592

## Description

La présente invention concerne des compositions thermoplastiques ignifugées comprenant en tant qu'agents ignifugeants des composés organophosphorés. Ces compositions permettent la réalisation de parties thermoplastiques ne provoquant pas de détérioration de l'aspect de surface de parties métalliques par corrosion ou dépôt.

### ART ANTERIEUR

Les compositions à base de résines thermoplastiques sont utilisées pour la réalisation d'articles par différents procédés de mise en forme. Ces articles doivent présenter des propriétés mécaniques élevées mais également des propriétés de résistance chimique, d'isolation électrique, ainsi qu'une bonne ignifugation lorsque ces pièces rentrent en combustion. Un des aspects important est que ces pièces ne doivent pas rentrer en combustion, c'est à dire ne pas produire de flammes ; ou alors rentrer en combustion mais à des températures les plus élevées possibles.

L'ignifugation des compositions à base de matrice thermoplastique a été étudiée depuis très longtemps. Ainsi, les ignifugeants principaux utilisés sont le phosphore rouge, les composés halogénés tels que les polybromodiphényles, les polybromodiphénoxydes, les polystyrènes bromés, des composés organiques azotés appartenant à la classe des triazines telles que la mélamine ou ses dérivés comme le cyanurate de mélamine et plus récemment les phosphates, polyphosphates et pyrophosphates de mélamine, les acides organo-phosphoreux et leurs sels.

Toutefois, la demanderesse a mis en évidence l'existence d'un mécanisme corrosif particulier qui entraine une détérioration de l'aspect de surface de parties métalliques qui sont en contact ou à proximité de parties thermoplastiques ignifugées. Ainsi il a été observé, que la plupart des agents ignifugeants compris dans des parties thermoplastiques vont conduire à la corrosion de la surface des parties métalliques, notamment sous l'influence de facteurs extérieurs tels que la température, l'eau et/ou l'oxygène. Par ailleurs, ces agents ignifugeants, ou leurs dérivés, se déposent sur la surface des parties métalliques, par des phénomènes de migration et/ou d'extraction dans la matrice thermoplastique.

Ces marques de corrosion et de dépôt sur les parties métalliques conduisent à terme à une diminution de leur durée de vie et à la modification de certaines de leurs propriétés intrinsèques, telles que leur conductivité électrique.

Partant de ce problème, il existait ainsi un besoin de trouver des agents ignifugeants, parfaitement aptes à l'ignifugation des compositions thermoplastiques ignifugées, qui soient en outre capables de ne pas détériorer la surface des parties métalliques en contact ou à proximité ; ainsi que des articles comprenant des parties plastiques et des parties métalliques ayant un bon aspect de surface, notamment dans un environnement comprenant de l'eau et/ou de l'oxygène à différentes températures.

Il convient de préciser que les phénomènes de corrosion engendrés par les agents d'ignifugation tels que le phosphore rouge ou les dérivés halogénés lors de la transformation de la composition thermoplastique et de son passage à l'état fondu sont connus de l'homme du métier. Car le passage en température nécessaire à l'élaboration de compositions thermoplastiques ignifugées ou à la mise en forme d'articles comprenant ces dernières impose à l'agent ignifugeant un stress thermique à des températures souvent proches de sa température de dégradation. Par voie de conséquence, l'agent ignifugeant subissant un stress thermique parfois prolongé peut se dégrader en générant en milieu fondu des espèces corrosives responsables de la corrosion des parties métalliques en contact avec ces dernières telles que les vis et fourreaux des extrudeuses, les vis et fourreaux des presses à injections ainsi que les canaux ou blocs chauds et les moules.

De plus, les agents ignifugeants de type halogénés ainsi que le phosphore rouge sont très majoritairement associés dans des compositions thermoplastiques à des charges de renfort afin de garantir une certaine rigidité aux articles réalisés. Et pour ce faire, les charges aciculaires de grande dureté telles la fibre de verre ainsi que les charges minérales à haut rapport de forme et de grande dureté comme la wollastonite sont préférentiellement utilisées. Ces dernières sont également connues pour générer en milieu fondu des phénomènes d'abrasion et d'usure de manière mécanique des parties métalliques des extrudeuses et presses à injection . Il est donc difficile pour ce type de composition de dissocier les phénomènes d'abrasion engendrés mécaniquement par les charges de renfort lors du convoi du flux fondu des phénomènes de corrosion chimique engendrés en température par la dégradations des agents ignifugeants. Il s'agit en réalité d'un phénomène associatif pour lequel ces deux modes d'action conduisent en milieu fondu à un phénomène de corrosion. Car l'abrasion mécanique associée aux charges génère des défauts au sein des parties métalliques qui sont par suite plus facilement corrodables par voie chimique.

Le mécanisme corrosif mis en évidence par la demanderesse selon la présente invention est différent puisqu'il se produit en absence de stress thermique pouvant induire la dégradation des agents ignifugeants et la création d'espèces corrosives, ni phénomènes de convoi de flux et donc d'abrasion mécanique permettant de créer des défauts de surface au sein des parties métalliques. En effet, dans le cadre de la présente invention, les parties thermoplastiques et métalliques sont à l'état solide et en contact ou a proximité. La nature et le moyen d'action des phénomènes corrosifs en sont donc par essence différents car doivent entrer en jeu des phénomènes d'extraction et/ou de migration des espèces corrodantes qui ne pouvaient avoir lieu en milieu fondu.

### INVENTION

La demanderesse a découvert de manière inattendue que l'utilisation de composés ignifugeants organophosphorés dans une matrice thermoplastique permettait de réaliser une partie thermoplastique n'entraînant pas, ou limitant, une détérioration de la surface d'une partie métallique située en contact ou à proximité de ladite partie thermoplastique.

Par ailleurs, ces compositions thermoplastiques présentent un niveau d'ignifugation très satisfaisant et de bonnes propriétés mécaniques.

La présente invention a ainsi pour objet l'utilisation d'un composé organophosphoré dans une matrice thermoplastique pour réaliser une partie thermoplastique permettant d'empêcher, de diminuer ou de réduire la dégradation de l'aspect de surface d'une partie métallique située en contact ou à proximité de la partie thermoplastique, caractérisée en ce que le composé organophosphoré est un acide phosphinique ou un sel d'acide phosphinique de formule (I) : 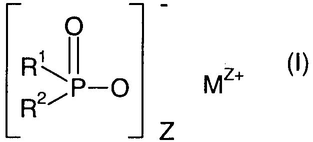 dans laquelle :
- R¹ et R² sont identiques ou différents et représentent une chaîne alkyle linéaire ou branchée comprenant de 1 à 6 atomes de carbones, préférentiellement de 1 à 3 atomes de carbones, et/ou un radical aryle ;
- M représente un ion calcium, magnésium, aluminium et/ou zinc. préférentiellement un ion magnésium et/ou aluminium ;
- Z représente 2 ou 3, préférentiellement 3 ;
et est utilisé en association avec un composé produit de réaction entre l'acide phosphorique et la mélamine et/ou un produit de réaction entre l'acide phosphorique et un dérivé de condensation de la mélamine.

La distance entre la partie métallique et la partie thermoplastique est généralement inférieure ou égale à 1 cm, préférentiellement inférieure ou égale à 0,5 cm, plus préférentiellement encore inférieure ou égale à 0,1 cm.

La partie métallique peut être constitué d'un métal ou d'un alliage de différents métaux, éventuellement recouvert, en totalité ou partiellement, par un dépôt métallique. La partie métallique peut par exemple comprendre un ou plusieurs métaux choisis dans le groupe comprenant le cuivre, le zinc, le nickel et l'argent. On peut citer à titre d'exemple un alliage de cuivre et de zinc pouvant être partiellement recouvert par un dépôt d'argent, d'un mélange d'argent et de nickel, ou encore d'un mélange d'argent et d'étain.

On préfère particulièrement les composés organophosphorés qui sont à l'état solide à une température de 25°C.

On utilise comme les composés organophosphorés, les acides phosphiniques ou leurs sels de formule (I), tels que l'acide 2-carboxyéthyl(phényl)phosphinique.

On préfère tout spécialement comme composés organophosphorés les sels d'acides phosphiniques de formule (I) : 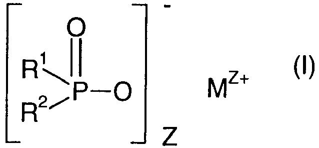 dans laquelle :
- R¹ et R² sont identiques ou différents et représentent une chaîne alkyle linéaire ou branchée comprenant de 1 à 6 atomes de carbones, préférentiellement de 1 à 3 atomes de carbones, et/ou un radical aryle ;
- M représente un ion calcium, magnésium, aluminium et/ou zinc, préférentiellement un ion magnésium et/ou aluminium ;
- Z représente 2 ou 3, préférentiellement 3.

R¹ et R² peuvent être identiques ou différents et représenter un méthyle, éthyle, n-propyl, isopropyl, n-butyl, ter-butyl, n-pentyl et/ou aryle tel qu'un phényle par exemple. M est préférentiellement un ion aluminium.

Comme composé organophosphoré, on préfère particulièrement les sels ou acides phosphiniques choisis par exemple parmi le groupe comprenant : l'acide diméthyl phosphinique, l'acide éthylméthyl phosphinique, l'acide diéthyl phosphinique, l'acide méthyl-n-propyl phosphinique, et/ou leur mélange.

Différents acides phosphiniques peuvent notamment être utilisés en combinaison.

Ces composés sont par exemple décrits dans le brevet US6255371. Ces sels d'acides phosphiniques peuvent être préparés selon les méthodes usuelles bien connues de l'homme du métier, telle que par exemple celle décrite dans le brevet EP 0699708. Ces sels d'acides phosphiniques peuvent être utilisés sous différentes formes dépendantes de la nature du polymère et des propriétés désirées. Par exemple, pour obtenir une bonne dispersion dans le polymère, un sel d'acide phosphinique peut être sous forme de fines particules.

La partie thermoplastique selon l'invention peut comprendre de 1 à 30 % en poids, préférentiellement de 5 à 25 % en poids de composés organophosphorés.

Selon l'invention, on utilise avec l'acide phosphinique ou son sel de formule (I), un composé produit de réaction entre l'acide phosphorique et la mélamine et/ou un produit de réaction entre l'acide phosphorique et un dérivé de condensation de la mélamine. Ce composé peut être choisi par exemple parmi le groupe comprenant les produits de réaction suivants : polyphosphate de mélamine, polyphosphate de mélam, et polyphosphate de mélem, et/ou leur mélange. Il est particulièrement préférable d'utiliser un polyphosphate de mélamine ayant des chaînes d'une longueur supérieure à 2, et en particulier supérieure à 10. Ces composés sont notamment décrits dans le brevet WO9839306 et US6255371. Ces composés peuvent être également obtenus par des procédés autres que ceux basés sur la réaction directe avec un acide phosphorique. Par exemple, le polyphosphate de mélamine peut être préparé par réaction de la mélamine avec de l'acide polyphosphorique (voir WO9845364), mais également par condensation du phosphate de mélamine et du pyrophosphate de mélamine (voir WO9808898).

Comme matrice thermoplastique selon l'invention, on peut notamment utiliser les résines oléfiniques tels que le polyéthylène, polypropylène, et polybutylène, polyisobutylène, les résines styréniques tels que les polystyrènes et copolymères acrylonitrile butadiène styrène, les polyamides, les polyactétals, les polyesters tels que le polyéthylène téréphthalate et le polybutylène téréphthalate, les polycarbonates, les polyester carbonates, les résines polysulfones, les polyphénylènes oxydes, les polyphénylène éthers, les polyphénylènes sulfides, les polymères vinyliques et leurs copolymères comme l'acétate de polyvinyle, l'alcool polyvinylique, le chlorure de polyvinyle, leurs dérivés et/ou leurs mélanges.

Comme polyamide selon l'invention, on peut citer les polyamides et copolyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères. Plus précisément, ces copolyamides peuvent être, par exemple, le polyadipamide d'hexaméthylène, les polyphtalamides obtenus à partir d'acide téréphtalique et/ou isophtalique, les copolyamides obtenus à partir d'acide adipique, d'hexaméthylène diamine et de caprolactame.

Selon un mode de réalisation préférentiel de l'invention, la matrice thermoplastique est un polyamide choisi dans le groupe comprenant le polyamide 6, le polyamide 66, le polyamide 11, le polyamide 12, le polymétaxylylènediamine (MXD6), les mélanges et copolymères à base de ces polyamides.

Le polyamide est préférentiellement choisi dans le groupe comprenant les polyamides obtenus par polycondensation d'un diacide carboxylique linéaire avec une diamine linéaire ou cyclique comme le PA 6.6, PA 6.10, PA 6.12, PA 12.12, PA 4.6, MXD 6 ou entre un diacide carboxylique aromatique et une diamine linéaire ou aromatique comme les polytéréphtalamides, polyisophtalamides, polyaramides, les polyamides obtenus par polycondensation d'un aminoacide sur lui-même, l'amino-acide pouvant être généré par l'ouverture hydrolytique d'un cycle lactame tels que, par exemple PA 6, PA 7, PA 11, PA 12.

La composition de l'invention peut également comprendre les copolyamides dérivés notamment des polyamides ci-dessus, ou les mélanges de ces polyamides ou copolyamides.

Les polyamides préférés sont le polyhexaméthylène adipamide, le polycaprolactame, ou les copolymères et mélanges entre le polyhexaméthylène adipamide et le polycaprolactame.

On utilise généralement des polyamides de poids moléculaires adaptés aux procédés de moulage par injection, bien que l'on puisse utiliser aussi des polyamides de plus faibles viscosités.

La matrice polyamide peut notamment être un polymère comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Selon une autre variante particulière de l'invention, la matrice polyamide de l'invention peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

La composition selon l'invention présente préférentiellement de 40 à 80 % en poids de polyamide, par rapport au poids total de la composition.

La composition de l'invention peut également comprendre d'autres composés ou additifs généralement utilisés dans des compositions à base de matrice thermoplastique, tel que par exemple : charges de renfort ou de remplissage, des stabilisants thermiques, des nucléants, des plastifiants, des ignifugeants, des agents suppresseurs de fumées, du borate de zinc, des antioxydants, des anti-UV, des colorants, des azurants optiques, des lubrifiants, des agents anti-collage (anti-blocking), des agents matifiants tel que l'oxyde de titane, des agents de mise en œuvre, des élastomères, des agents d'adhésion, des agents dispersants, des pigments, des agents modifiants la résistance aux chocs, des capteurs ou absorbeurs d'oxygène actifs, des agents pour le marquage laser, et/ou des catalyseurs.

La composition de l'invention peut notamment comprendre des charges de renfort ou de remplissage choisi dans le groupe comprenant les charges fibreuses telles que les fibres de verre, les fibres d'aramides et les fibres de carbone ; et/ou des charges minérales, telles que les argiles alumino-silicates, les kaolin, les wollastonites, les talcs, les carbonates de calcium, les fluoro-micas, les phosphates de calcium et dérivés, et la poudre de verre. La concentration pondérale des charges de renfort est comprise avantageusement entre 1 % et 50 % en poids par rapport au poids total de la composition, de préférence entre 15 et 50 %.

Il n'y a pas de limitation aux types d'agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les EPDM (ethylène-propylène-diène momonère) avec éventuellement un anhydride maléïque greffé. La concentration pondérale en élastomère est avantageusement comprise entre 0,1 et 30 % par rapport au poids total de la composition.

Les matériaux et compositions de l'invention sont généralement obtenus par mélange des différents constituants à chaud, par exemple dans une extrudeuse mono ou bivis, à une température suffisante pour maintenir la résine polyamide en milieu fondu ; ou à froid dans un mélangeur mécanique notamment.

Généralement, le mélange obtenu est extrudé sous forme de joncs qui sont coupés en morceaux pour former des granulés. Les composés organophosphorés peuvent être ajoutés à n'importe quel moment du processus de fabrication du matériau plastique, notamment par mélange à chaud ou à froid avec la matrice thermoplastique.

L'addition des composés et des additifs peut être réalisée par ajout de ces composés dans la matrice thermoplastique fondue sous forme pure ou sous forme de mélange concentré dans une matrice telle que par exemple une matrice thermoplastique.

Les granulés obtenus sont alors utilisés comme matière première pour alimenter les procédés de fabrication d'articles tels que les procédés d'injection, d'extrusion, d'extrusion-soufflage.

On entend par partie thermoplastique, une partie solide obtenue par mise en forme d'une composition selon l'invention comprenant au moins une matrice thermoplastique et un composé organophosphoré, et concerne tout particulièrement des articles électriques ou électroniques, comprenant au moins une partie thermoplastique et au moins une partie métallique, tels que par exemple des prises électriques, des disjoncteurs électriques, des programmateurs, notamment pour appareils électroménagers, des alarmes antivols, des interrupteurs électriques, des adaptateurs électriques, des câbles, des batteries et testeurs de batteries, des téléphones, et des bobines.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### Exemple 1 : Fabrication de granulés de polyamide

Des compositions sont préparées par mélange des composants dans des proportions indiquées dans le tableau 1 ci-dessous, sur une extrudeuse double-vis Werner & Pfleiderer ZSK 40, ayant une vitesse de vis de 200 rpm et une sortie de 35 kg/h, à une température de 270°C. Les fibres de verre sont ajoutées au mélange à la gorge de l'extrudeuse. Le mélange est extrudé sous forme de joncs qui sont coupés pour obtenir des granulés.

Les compositions réalisées sont les suivantes :
**A :** La composition comprend du polyamide 66 (PA66) ayant un indice de viscosité de 140 ml/g, selon la norme ISO 307, mesuré dans l'acide formique, et un Mn de 17600 g/mol, mesurée par GP ; et
   - 30 % en poids de fibres de verre 983 de Vetrotex
**B :**La composition comprend le même PA 66 que dans la composition A, et
   - 7 % en poids de phosphore rouge (par introduction de 10 % de masterbatch : Masteret 24470 - Masterbatch 70/30 Italmatch)
   - 25 % en poids de fibres de verre 983 de Vetrotex
**C :**La composition comprend le même PA 66 que dans la composition A, et
   - 21 % en poids de polystyrène bromé : PDBS 80 (Chemtura)
   - 30 % en poids de fibres de verre 983 de Vetrotex
   - 6 % en poids de borate de zinc
**D :** La composition comprend le même PA 66 que dans la composition A, et
   - 11,6 % en poids de diéthylphosphinate d'aluminium (Clariant)
   - 5,8 % en poids de polyphosphate de mélamine M200 (Ciba)
   - 30 % en poids de fibres de verre 983 de Vetrotex

### Exemples 2 : Test de la résistance à la détérioration de la surface de parties métalliques

10 g de polymère en granulés sont introduits dans un flacon en verre avec 1 g d'un article métallique, ayant une surface de 6 cm², et 2 ml d'eau distillée. Le flacon est bouché et placé dans une étude à 80-90°C pendant 7 jours. Dans l'exemple C1, aucun granulé n'est mis en présence d'un article métallique.

Les articles métalliques sont alors récupérés et on observe la présence de taches de corrosion ou de dépôts. La nature de la corrosion est appréciée par une observation au microscope électronique à balayage et microanalyse X quantitative (SEM/EDAX) Philips XL30.

Les résultats sont mentionnés dans le Tableau ci-dessous :

**Tableau 1**

| | **C1** | **C2** | **C3** | **C4** | **1** |
|---|---|---|---|---|---|
| Granulés | aucun | Composition A | Composition B | Composition C | Composition D |
| Observation visuelle | Présence de taches très limitées | Présence de taches très limitées | Présence de taches et des dépôts | Présence de taches et des dépôts blancs | Présence de taches très limitées |
| Observation SEM/EDAX | Cu / Zn oxydes | Cu / Zn oxydes | Cu/Zn oxydes Dépôt de phosphore | Cu/Zn oxydes Dépôt de brome | Cu/Zn oxydes Léger dépôt de phosphore |

On observe ainsi une diminution significative de la corrosion des pièces métalliques ainsi que des dépôts en surface en passant des systèmes ignifugeants de phosphore rouge, les plus mauvais, aux composés organophosphorés selon l'invention, qui sont les meilleurs ; pour des prestations en termes de propriétés ignifugeantes identiques voire meilleures (GWFT 960°C à 1 mm et UL V0 à 0,8 mm).

L'évaluation qualitative de la surface des pièces métalliques après les tests démontre de manière évidente que la nature chimique des systèmes organophosphorés a une incidence nettement plus faible sur la génération d'espèces corrosives et/ou de dépôts, et par voie de conséquence sur la durée de vie de ces mêmes pièces, que les systèmes ignifugeants traditionnels de type bromés ou de phosphore rouge.

Par ailleurs il est à noter que la composition D selon l'invention présente une classification V0 au test UL94 avec des éprouvettes moulées de 0,8 mm d'épaisseur ; alors que la composition A présente une classification NC (non classifiable) selon le test UL 94.

## Revendications

1. Utilisation d'un composé organophosphoré dans une matrice thermoplastique pour réaliser une partie thermoplastique permettant d'empêcher, de diminuer ou de réduire la dégradation de l'aspect de surface d'une partie métallique située en contact ou à proximité de la partie thermoplastique, **caractérisée en ce que** le composé organophosphoré est un acide phosphinique ou un sel d'acide phosphinique de formule (I) : 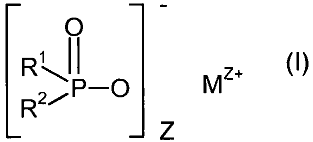 dans laquelle :
- R¹ et R² sont identiques ou différents et représentent une chaîne alkyle linéaire ou branchée comprenant de 1 à 6 atomes de carbones, préférentiellement de 1 à 3 atomes de carbones, et/ou un radical aryle ;
- M représente un ion calcium, magnésium, aluminium et/ou zinc, préférentiellement un ion magnésium et/ou aluminium ;
- Z représente 2 ou 3, préférentiellement 3 ;
et est utilisé en association avec un composé produit de réaction entre l'acide phosphorique et la mélamine et/ou un produit de réaction entre l'acide phosphorique et un dérivé de condensation de la mélamine.

2. Utilisation selon la revendication 1, **caractérisée en ce que** le composé organophosphoré est à l'état solide à une température de 25°C.

3. Utilisation selon la revendication 1 ou 2, **caractérisée en ce que** le sel ou acide phosphinique est choisi parmi le groupe comprenant : l'acide diméthyl phosphinique, l'acide éthylméthyl phosphinique, l'acide diéthyl phosphinique, l'acide méthyl-n-propyl phosphinique, et/ou leur mélange.

4. Utilisation selon l'une quelconque des revendications 1 à 3, **caractérisée en ce que** la partie thermoplastique comprend de 1 à 30 % en poids de composés organophosphorés.

5. Utilisation selon l'une quelconque des revendications 1 à 4, **caractérisée en ce que** la partie thermoplastique comprend une matrice thermoplastique choisie dans le groupe comprenant : les résines oléfiniques tels que le polyéthylène, polypropylène, et polybutylène, polyisobutylène, les résines styréniques tels que les polystyrènes et copolymères acrylonitrile butadiène styrène, les polyamides, les polyactétals, les polyesters tels que le polyéthylène téréphthalate et le polybutylène téréphthalate, les polycarbonates, les polyester carbonates, les résines polysulfones, les polyphénylènes oxydes, les polyphénylène éthers, les polyphénylènes sulfides, les polymères vinyliques et leurs copolymères comme l'acétate de polyvinyle, l'alcool polyvinylique, le chlorure de polyvinyle, leurs dérivés et/ou leurs mélanges.

6. Utilisation selon l'une quelconque des revendications 1 à 5, **caractérisée en ce que** la partie thermoplastique comprend une matrice polyamide choisie dans le groupe comprenant le polyamide 6, le polyamide 66, le polyamide 11, le polyamide 12, le polymétaxylylènediamine (MXD6), les mélanges et copolymères à base de ces polyamides.

## Patentansprüche

1. Verwendung einer Organophosphorverbindung in einer thermoplastischen Matrix zur Herstellung eines thermoplastischen Teils, die die Verhinderung, Verminderung oder Reduzierung der Verschlechterung des Oberflächenaussehens eines Metallteils, das sich in Kontakt mit dem thermoplastischen Teil oder in der Nähe des thermoplastischen Teils befindet, ermöglicht, **dadurch gekennzeichnet, dass** es sich bei der Organophosphorverbindung um Phosphinsäure oder ein Phosphinsäurealz der Formel (I): 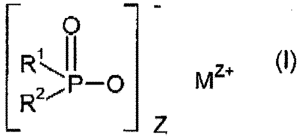 handelt, wobei:
- R¹ und R² gleich oder verschieden sind und für eine lineare oder verzweigte Alkylkette mit 1 bis 6 Kohlenstoffatomen, vorzugsweise 1 bis 3 Kohlenstoffatomen, und/oder einen Arylrest stehen;
- M für ein Calcium-, Magnesium-, Aluminium- und/oder Zinkion, vorzugsweise ein Magnesium- und/oder Aluminiumion, steht;
- Z für 2 oder 3, vorzugsweise 3, steht;
und in Verbindung mit einer Verbindung, bei der es sich um das Reaktionsprodukt von Phosphorsäure und Melamin und/oder ein Reaktionsprodukt von Phosphorsäure und einem Melaminkondensationsderivat handelt, verwendet wird.

2. Verwendung nach Anspruch 1, **dadurch gekennzeichnet, dass** die Organophosphorverbindung bei einer Temperatur von 25°C in festem Zustand vorliegt.

3. Verwendung nach Anspruch 1 oder 2, **dadurch gekennzeichnet, dass** das Phosphinsäuresalz oder die Phosphinsäure ausgewählt ist aus der Gruppe umfassend Dimethylphosphinsäure, Ethylmethylphosphinsäure, Diethylphosphinsäure, Methyl-n-propylphosphinsäure und/oder eine Mischung davon.

4. Verwendung nach einem der Ansprüche 1 bis 3, **dadurch gekennzeichnet, dass** das thermoplastische Teil 1 bis 30 Gew.- % Organophosphorverbindungen umfasst.

5. Verwendung nach einem der Ansprüche 1 bis 4, **dadurch gekennzeichnet, dass** das thermoplastische Teil eine thermoplastische Matrix aus der Gruppe umfassend Olefinharze wie Polyethylen, Polypropylen und Polybutylen, Polyisobutylen, Styrolharze wie Polystyrole und Acrylnitril-Butadien-Styrol-Copolymere, Polyamide, Polyacetale, Polyester wie Polyethylenterephthalat und Polybutylenterephthalat, Polycarbonate, Poly-estercarbonate, Polysulfonharze, Polyphenylenoxide, Polyphenylenether, Polyphenylensulfide, Vinylpolymere und Copolymere davon wie Polyvinylacetat, Polyvinylalkohol, Polyvinylchlorid, Derivate davon und/oder Mischungen davon umfasst.

6. Verwendung nach einem der Ansprüche 1 bis 5, **dadurch gekennzeichnet, dass** das thermoplastische Teil eine Polyamidmatrix aus der Gruppe umfassend Polyamid 6, Polyamid 66, Polyamid 11, Polyamid 12, Poly-meta-xylylendiamin (MXD6), Mischungen und Copolymere auf Basis dieser Polyamide umfasst.

## Claims

1. Use of an organophosphorus compound in a thermoplastic matrix for producing a thermoplastic part that makes it possible to prevent, to lessen or to reduce the degradation of the surface appearance of a metal part located in contact with or in the vicinity of the thermoplastic part, **characterized in that** the organophosphorus compound is a phosphinic acid or a phosphinic acid salt of formula (I): 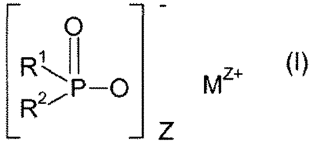 in which :
- R¹ and R² are identical or different and represent a linear or branched alkyl chain comprising from 1 to 6 carbon atoms, preferably from 1 to 3 carbon atoms, and/or an aryl radical;
- M represents a calcium, magnesium, aluminium and/or zinc ion, preferably a magnesium and/or aluminium ion; and
- Z represents 2 or 3, preferably 3;
and is used in combination with a compound that is the reaction product between phosphoric acid and melamine and/or the reaction product between phosphoric acid and a melamine condensation derivative.

2. Use according to Claim 1, **characterized in that** the organophosphorus compound is in the solid state at a temperature of 25°C.

3. Use according Claim 1 or 2, **characterized in that** the phosphinic acid or salt is chosen from the group comprising: dimethylphosphinic acid, ethylmethylphosphinic acid, diethylphosphinic acid, methyl-n-propylphosphinic acid, and/or the mixture thereof.

4. Use according to any one of Claims 1 to 3, **characterized in that** the thermoplastic part comprises from 1 to 30 % by weight of organophosphorus compounds.

5. Use according to any one of Claims 1 to 4, **characterized in that** the thermoplastic part comprises a thermoplastic matrix chosen from the group comprising: olefin resins such as polyethylene, polypropylene and polybutylene, polyisobutylene, styrene resins such as polystyrenes and acrylonitrile-butadienestyrene copolymers, polyamides, polyacetals, polyesters such as polyethylene terephthalate and polybutylene terephthalate, polycarbonates, polyester carbonates, polysulphone resins, polyphenylene oxides, polyphenylene ethers, polyphenylene sulphides, vinyl polymers and copolymers thereof such as polyvinyl acetate, polyvinyl alcohol, polyvinyl chloride, derivatives thereof and/or mixtures thereof.

6. Use according to any one of Claims 1 to 5, **characterized in that** the thermoplastic part comprises a polyamide matrix chosen from the group comprising polyamide PA-6, polyamide PA-6,6, polyamide PA-11, polyamide PA-12, polymetaxylylenediamine (MXD6), and the blends and copolymers based on these polyamides.
